# EUROPÄISCHE PATENTSCHRIFT

(11) **EP 1 403 113 B1**
(45) Veröffentlichungstag und Bekanntmachung des Hinweises auf die Patenterteilung: **09.06.2010**
(21) Anmeldenummer: 03020186.7
(22) Anmeldetag: 05.09.2003
(51) Int. Cl.: B60J 7/043

(54) **Schiebedach für ein Kraftfahrzeug**
Sliding roof for a motor vehicle
Toit ouvrant pour un véhicule automobile

(30) Priorität: 27.09.2002 FR 0212038
(43) Veröffentlichungstag der Anmeldung: 31.03.2004
(73) Patentinhaber: Webasto AG, 82131 Stockdorf (DE)
(72) Erfinder: Cocaign, Jean-Guy, 49280 La Tessoualle (FR)

(56) Entgegenhaltungen:
- FR-A- 2 797 225
- US-A- 5 069 501
- US-A- 5 197 779

## Beschreibung

Die vorliegende Erfindung bezieht sich auf ein Schiebedach für ein Kraftfahrzeug und insbesondere auf das Führungssystem der beweglichen Scheibe dieses Daches, welches es ermöglicht, seine Öffnung durch ein im wesentlichen horizontales Verschieben zu bewirken.

Es sind bereits zahlreiche Vorrichtungen dieser Art bekannt, sie werden insbesondere in dem Dokument FR-A-2797225 beschrieben. Bei dieser Vorrichtung wird die bewegliche Scheibe, deren allgemeine Form im wesentlichen rechteckig ist, durch einen Satz von Schwenkeinrichtungen oder Klauen getragen, die an den vier Ecken mit ihr verbunden sind und die im übrigen in seitlichen Führungsschienen geführt und verschieblich nach vorwärts und nach rückwärts bewegt werden, was im allgemeinen durch ein durch einen Motor angetriebenes Kabel oder ein anderes äquivalentes Antriebsmittel erfolgt. Die erwähnte bewegliche Scheibe befindet sich im vorderen Teil des Fahrzeuges und öffnet sich, indem sie sich nach hinten und unter ein festes Dachelement bewegt. Um die bewegliche Scheibe in der geschlossenen Position im wesentlichen ohne Überstand relativ zum festen Element und zum Rest des Daches zu halten, wird das Führungssystem in der Weise gestaltet, daß mit Beginn des Öffnungshubs mindestens der rückwärtige Teil der beweglichen Scheibe angehoben wird, damit er sich in einer Position oberhalb des Niveaus der festen Scheibe befindet.

Bei der Vorrichtung nach dem vorgenannten Dokument ermöglicht es das genannte schnelle Anheben des rückwärtigen Teils der beweglichen Scheibe außerdem, eine Zwischenposition der Öffnung zu liefern, bei der die bewegliche Scheibe geneigt ist, wobei die Vorderseite der beweglichen Scheibe in der niedrigen Stellung auf einer vorderen Dichtung abgestützt verbleibt, um Luftzug und Geräuschentwicklung im Fahrzeuginneren zu begrenzen. Wenn die Betätigungsmittel betätigt werden, um die bewegliche Scheibe über ihre geöffnete Stellung hinaus zu bewegen, wird die Vorderseite der beweglichen Scheibe entsprechend angehoben, und die Scheibe kann oberhalb der festen Scheibe nach hinten gleiten.

In der Tat weist das System auf jeder Fahrzeugseite eine vordere Schwenkeinrichtungsstange bzw. einen vorderen Arm auf, die jeweils einzeln durch eine Schiene in geeigneter Form geführt werden.

Die hintere Schwenkeinrichtungsstange ist entsprechend einer zum Fahrzeug in Querrichtung verlaufenden Schwenkachse bzw. Gelenkachse auf einem mit der Scheibe fest verbundenen Schwenkeinrichtungsträger drehbar montiert, so daß sich die Schwenkeinrichtungsstange in einer vertikalen Längsebene dreht. Die Schwenkeinrichtungsstange weist im übrigen in einem Abstand von ihrer Gelenkachse in Richtung auf das Fahrzeugheck zwei Finger auf, die sich im wesentlichen parallel zur genannten Achse erstrecken und die in ein und dieselbe hintere Führungsschiene eingreifen, welche mit dem Fahrzeugdach fest verbunden ist, eine seitlich geöffnete U-förmige Querschnittsform aufweist und sich in Richtung des Fahrzeughecks gesehen in einem seitlichen Bereich neben dem festen Element in der Weise erstreckt, daß eine Führung der Schwenkeinrichtungsstange während des gesamten Öffnungshubs der beweglichen Scheibe sichergestellt wird. In ihrem im Fahrzeug am weitesten vorne gelegenen Teil weist die genannte Schiene eine gekrümmte Form auf, deren konkaver Teil nach unten gerichtet ist, und es liegen, wenn sich das Dach am Ende des Vorwärtshubs in der geschlossenen Stellung befindet, die beiden Finger in diesem gekrümmten Teil, wobei dann der am weitesten vorne liegende Finger tiefer liegt als der weiter hinten liegende. In dieser Schließstellung wird also die Gelenkachse der Schwenkeinrichtungsstange in gewisser Weise nach unten gedrückt, um die bewegliche Scheibe fest auf die peripheren Dichtungen der Dachöffnung zu drücken. Wenn dagegen die Scheibe nach hinten zu gleiten beginnt, bewirken die Finger, indem sie sich gleitend in dem gekrümmten Teil der Schiene bewegen, daß sich die Schwenkeinrichtungsstange dreht und die Gelenkachse nach oben mitnimmt, also demzufolge die hintere Kante der beweglichen Scheibe über das Niveau der festen Scheibe anhebt, wie dies vorstehend angegeben wurde. Bei der Fortsetzung der Bewegung nach hinten gelangen die beiden Finger in einen Teil der Schiene, der im wesentlichen geradlinig und parallel zum Dach verläuft, und gleiten dort bis zum Ende des Hubes nach hinten, wobei sie demzufolge eine Bewegung der beweglichen Scheibe nach hinten sicherstellen, die im wesentlichen parallel zur festen Scheibe erfolgt.

Die Führung des vorderen Teils der beweglichen Scheibe wird in analoger Weise durch eine vordere Schwenkeinrichtungsstange ausgeführt, die ebenfalls zwei Finger aufweist, die in ein und derselben vorderen Führungsschiene geführt werden, wobei diese Schiene gelenkig an einem mit der beweglichen Scheibe verbundenen Befestigungspunkt montiert ist. Dagegen ist die Form der Führungsbahn der Schiene in ihrem weiter vorne gelegenen Teil leicht unterschiedlich und weist insbesondere eine leicht sinusförmige Form auf, wobei ein erster Teil wie die gekrümmte Bahn der hinteren Führungsschiene gekrümmt und speziell dafür vorgesehen ist, zu bewirken, daß sich die Vorderkante der beweglichen Scheibe korrekt auf der Dichtung in der halb geöffneten Stellung abstützt, nachdem sie sich vorher während des ersten Öffnungshubs ein wenig von derselben entfernt hatte. Die Bahn weist einen zweiten Teil auf, welcher eine zweite Krümmung aufweist, um die Scheibe für die Fortsetzung ihrer Öffnung anzuheben, und er setzt sich anschließend durch einen geradlinigen Führungsteil bis zur Position der maximalen Öffnung fort.

Die Verwendung dieses Systems hat jedoch ihre Grenzen, wenn es notwendig ist, einen relativ großen Hub der Vorderkante der beweglichen Scheibe sicherzustellen, was besonders bei Fahrzeugen der Fall sein kann, bei denen insbesondere aus Styling-Gründen der Bereich der Vorderkante der beweglichen Scheibe wesentlich breiter ist als der Rest der Scheibe. Da im übrigen die Gesamtheit der Scheibe in das Dach eingepaßt werden muß, und insbesondere nicht relativ zu den Rändern des Daches oder seitlichen Zierleisten in der Höhe überstehen darf, ist es notwendig, die Scheibe ausreichend anzuheben, um diesen Rändern oder Zierleisten auszuweichen und es zu ermöglichen, daß die vorderen Ränder der Scheibe darüber hinweggleiten, wenn die Scheibe sich nach hinten bewegt. Es ist also erforderlich, daß nicht nur der hintere Teil der beweglichen Scheibe ausreichend angehoben wird, um über die rechte Scheibe hinwegzugleiten, sondern auch, daß der Vorderteil ausreichend angehoben wird, um über die seitlichen Dachränder hinwegzugleiten. Aus Gründen des Platzbedarfs im Dachbereich ist es nun nicht möglich, im vorderen Bereich des Fahrzeuges Systeme wie die vorstehend beschriebenen Schwenkeinrichtungssysteme vorzusehen, die es ermöglichen würden, einen ausreichenden vertikalen Hub der Scheibe sicherzustellen, wobei die Systeme gleichzeitig aus ästhetischen Gründen in der Dicke des Daches kaschiert werden müssen und eine akzeptable Dachstärke einzuhalten ist.

Der Erfindung liegt die Aufgabe zugrunde, diese Probleme zu lösen, und sie betrifft insbesondere die Bereitstellung eines Betätigungs- und Führungssystems der beweglichen Scheibe, das keine Einschränkungen hinsichtlich der äußeren Formen der zu öffnenden Scheibe bewirkt.

Im Hinblick auf diese Aufgaben hat die Erfindung ein Schiebedach für Kraftfahrzeuge zum Gegenstand, welches eine bewegliche Scheibe, die dazu bestimmt ist, eine im Dach vorgesehene Öffnung zu verschließen oder freizugeben, vordere Führungsmittel und hintere Führungsmittel zur Führung einer Öffnungsoder Schließbewegung der beweglichen Scheibe nach einem Hub, dessen allgemeine Richtung im wesentlichen horizontal verläuft und am Ende mit einer geneigten Bahn abschließt, die eine vertikale Bewegung bewirkt, und Antriebsmittel, welche auf die vorderen Führungsmittel einwirken, um die genannte Bewegung jeweils nach vorne und nach hinten zu steuern, aufweist
dadurch gekennzeichnet, daß die vorderen Führungsmittel mit den Antriebsmitteln durch teleskopische Verbindungsmittel verbunden sind, welche die Bewegung der Führungsmittel relativ zu den Antriebsmitteln nach einer im wesentlichen vertikalen Richtung erlauben.

Wie im weiteren Verlauf besser zu verstehen sein wird, kann also der Antrieb in an sich bekannter Weise erfolgen, beispielsweise durch ein Antriebskabel, dessen mit den Führungsmitteln verbundenes Ende sich nach einer geradlinigen, im wesentlichen horizontalen Bahn bewegt, wobei es die vertikalen teleskopischen Verbindungsmittel dem Führungsmittel erlauben, eine bedeutende vertikale Bewegung auszuführen, und wobei sie gleichzeitig in der Schließstellung des Schiebedachs einen geringen Platzbedarf haben, der es ermöglicht, die genannten Verbindungsmittel in der Dicke der Dachauskleidung zu kaschieren.

Nach einer besonderen Anordnung der Erfindung weisen die Antriebsmittel einen Antriebsschlitten auf, und die teleskopischen Verbindungsmittel weisen einen Gleitblock auf, der in einer vertikalen Gleitbewegung auf dem Antriebsschlitten geführt wird und auf dem die Führungsmittel bei einer vertikalen Gleitbewegung geführt werden.

Nach einer bevorzugten Ausführungsform wird der Gleitblock auf dem Antriebsschlitten durch ein T- oder schwalbenschwanzförmiges Gleitschienensystem geführt, und die Führungsmittel weisen einen Zapfen auf, der sich seitlich erstreckt und in einer in dem Gleitblock angebrachten Nut geführt wird.

Nach einer weiteren besonders vorteilhaften Anordnung weisen die vorderen Führungsmittel auf jeder Seite der beweglichen Scheibe eine mit dem Dach fest verbundene vordere Führungsschiene auf, in die ein Gleitschuh eingreift, welcher mit einem fest auf der Scheibe befestigten Arm verbunden ist, wobei die Schiene einen seitlich zur Mitte des Fahrzeuges hin offenen U-förmigen Querschnitt hat und in Richtung auf das Fahrzeuginnere relativ zu einer Dichtung montiert ist, die die Öffnung begrenzt und auf die die bewegliche Scheibe in der Schließstellung zu liegen kommt.

Wenn demzufolge das Dach in der geschlossenen Stellung befindlich ist, liegen sämtliche Führungs- und Antriebsmittel relativ zu den Dichtungen eher im Inneren des Fahrzeuges und werden also vor Witterungs- und sonstigen für die Führungs- und Antriebseinrichtungen schädlichen äußeren Einflüssen vollkommen geschützt. Dank des in der Höhe reduzierten Platzbedarfs, der durch die teleskopischen Verbindungsmittel erhalten wird, können die genannten Führungs- und Antriebsmittel darüber hinaus in der Dicke des Daches untergebracht werden, und sie schaden damit nicht dem ästhetischen Eindruck im Fahrzeuginneren.

Vorzugsweise weisen die Führungsschienen vorne einen Teil auf, der eine geneigte Bahn mit einer Zwischenstufe mit umgekehrter Neigung sicherstellt, um dem Schiebedach eine halbgeöffnete Zwischenstellung zu liefern. Wie dies im weiteren Verlauf erläutert werden wird, gestattet diese Anordnung in der Tat, die Dichtigkeit der Vorderkante der sich öffnenden Scheibe dank der Zwischenstufe der Schiene sicherzustellen, die ein erneutes Abstützen der beweglichen Scheibe auf der Dichtung bewirkt, nachdem sie sich ganz am Anfang der Öffnung davon gelöst hatte, wobei dann die hintere Kante der beweglichen Scheibe bereits in der angehobenen Stellung befindlich ist.

Nach einer weiteren bevorzugten Anordnung weisen die hinteren Führungsmittel auf jeder Seite eine hintere Führungsschiene auf, die mit dem Dach fest verbunden ist und in den Gleitschuh eingreifen, welche fest mit einer drehbar an der Scheibe montierten Schwenkeinrichtungsstange verbunden sind, wobei die Schiene einen seitlich hin zur Außenseite des Fahrzeuges offenen U-förmigen Querschnitt hat und in Richtung auf die Mitte des Fahrzeuges relativ zu einer Dichtung unter einer festen Dachscheibe, auf deren beiden Seiten sich die Schwenkeinrichtungsstangen bewegen, montiert ist.

Diese Anordnung erlaubt es insbesondere, die hinteren Führungsschienen unter der hinter der Dachöffnung angeordneten festen Scheibe, und zwar innerhalb der Dachstärke zu plazieren. Diese Anordnung ermöglicht es entsprechend, die seitlichen Ränder des Daches vollständig von sämtlichen Führungsmitteln zu befreien, wobei diese Ränder dann in sehr viel einfacherer Form ausgestaltet werden können, insbesondere nur die Funktion von Zierleisten erfüllen und keinerlei mechanische Funktion als Schiene oder sonstiges Führungsorgan haben, was zu Einschränkungen hinsichtlich der mechanischen Festigkeit führen würde.

Weitere erfindungswesentliche Merkmale gehen aus der nachfolgenden Beschreibung hervor, in der mit Bezug auf die Zeichnungen Ausführungsbeispiele erläutert werden. In den Zeichnungen zeigen:
Fig. 1 eine teilweise perspektivische Übersichtsansicht der Oberseite des Fahrzeugschiebedaches in der geschlossenen Stellung;
Fig. 2 eine analoge Darstellung in der geöffneten Stellung;
Fig. 3 eine Teilansicht der linken Dachhälfte, wobei die bewegliche Scheibe offen ist, und die die Lage der Führungsmittel der beweglichen Scheibe zeigt;
Fig. 4 die Verbindung einer hinteren Führungsschwenkeinrichtung an der beweglichen Scheibe;
Fig. 5 die Verbindung eines vorderen Führungsarmes mit der beweglichen Scheibe;
Fig. 6 eine Explosionszeichnung des Antriebsschlittens und des vorderen Führungsarmes;
Fig. 7 eine Explosionszeichnung der hinteren Führungsschwenkeinrichtungsstange und ihrer Verbindung an der beweglichen Scheibe;
Fig. 8 eine von der Fahrzeuginnenseite her gesehene Seitenansicht der vorderen Führungsmittel, welche das vordere Ende der vorderen Führungsschiene und den vorderen Führungsarm in der geschlossenen Stellung der beweglichen Scheibe zeigt, wobei der Antriebsschlitten nicht gezeigt wird;
Fig. 9 eine teilweise Schnittansicht nach der Linie IX-IX der Fig. 8 ist;
Fig. 10 eine Seitenansicht mit der Darstellung der Position des vorderen Führungsarms und des Antriebsschlittens bei geschlossener beweglicher Scheibe;
Fig. 11 eine Schnittansicht nach der Linie H-H der Fig. 10;
Fig. 12 eine Schnittansicht nach der Linie I-I der Fig. 10;
Fig. 13 bis 18 den Figuren 10, 11, 12 entsprechende Ansichten, jeweils in einer halb geöffneten Stellung der beweglichen Scheibe (Figuren 13 bis 15) und in einer voll geöffneten Stellung (Figuren 16 bis 18);
Fig. 19 eine Seitenansicht der hinteren Führungsmittel in der geschlossenen Stellung, wobei die Schwenkeinrichtungsstange und die bewegliche Scheibe in gestrichelten Linien in der Öffnungsstellung dargestellt werden;
Fig. 20 eine Schnittansicht nach der Linie 20-20 der Fig. 19, wobei die bewegliche Scheibe geschlossen ist und
Fig. 21 eine entsprechende weiter nach hinten versetzte Ansicht bei geöffneter beweglicher Scheibe ist.

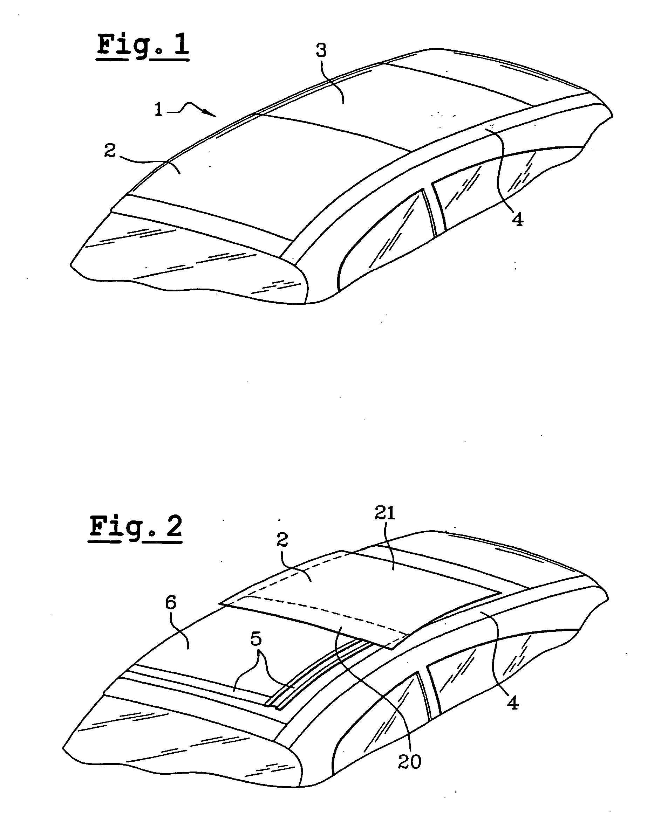

In Fig. 1 wird das Dach 1 eines Fahrzeuges dargestellt, das eine vordere bewegliche Scheibe 2 in geschlossener Stellung aufweist und eine feste hintere Scheibe 3, die seitlich durch eine Zierleiste 4 umrahmt werden.

In Fig. 2 ist die bewegliche Scheibe 2 geöffnet, nachdem sie sich oberhalb der festen Scheibe 3 verschieblich nach hinten bewegt hat, und läßt den Rahmen 5 sichtbar werden, der von der Öffnung 6 des Daches begrenzt wird und eine periphere Dichtung 7 aufweist. Es wird bei dieser Figur bemerkt werden, daß im Hinblick auf die Anpassung an die Gesamtlinie des Fahrzeuges und insbesondere um mit der Seitenkante der beweglichen Scheibe der Linie der Dachkante zu folgen, beispielsweise um eine konstante Breite der Zierleiste beizubehalten, die vordere Kante 20 der beweglichen Scheibe breiter ist als der hintere Teil der genannten Scheibe. Daraus resultiert, daß die seitlichen Enden dieser vorderen Kante über die Zierleiste 4 hervorstehen, wenn die genannte bewegliche Scheibe geöffnet ist.

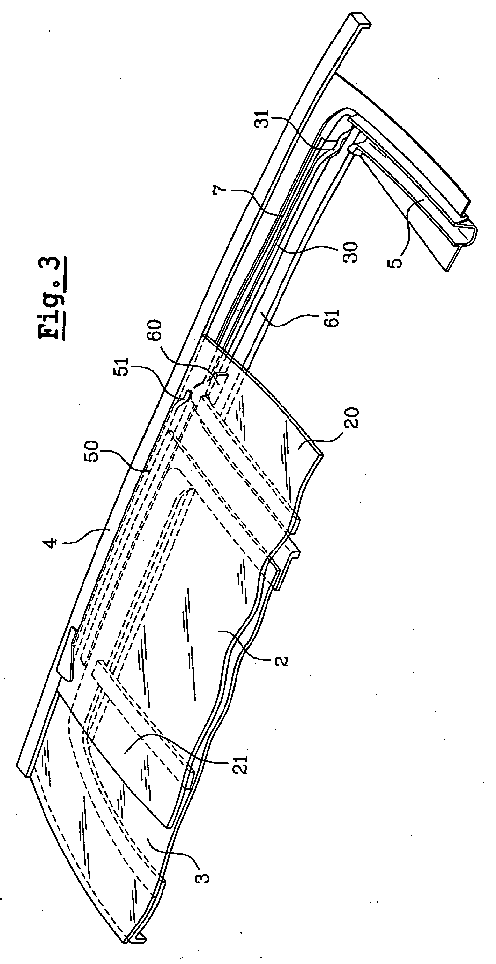

In der Darstellung der Fig. 3 ist das Dach erneut in geöffneter Stellung zu sehen, und es ist insbesondere eine vordere Führungsschiene 30 zu erkennen, die vorne mit einem nach vorne und nach unten geneigten und eine Rampe mit einem sinusförmigen Verlauf bildenden Teil 31 endet. Das vordere Ende 32 des genannten geneigten Teils liegt relativ zum Rest der Schiene auf einem niedrigeren Niveau, bleibt jedoch im Bereich der Stärke des Dachhimmels. Die Schiene 30 hat insgesamt einen U-förmigen, seitlich in Richtung auf die Mitte des Fahrzeuges offenen Querschnitt.

Es wird bemerkt werden, daß die Schiene vollständig unterhalb der die Öffnung des Dachs begrenzenden Dichtung 7 liegt, auf die die bewegliche Scheibe in der Schließstellung zu liegen kommt, sich also im Vergleich zu der genannten Dichtung ebenso wie eine Führungsschiene 61 eines Mitnehmerschlittens 60, der im folgenden detaillierter beschrieben wird, eher im Inneren des Fahrzeuges befindet.

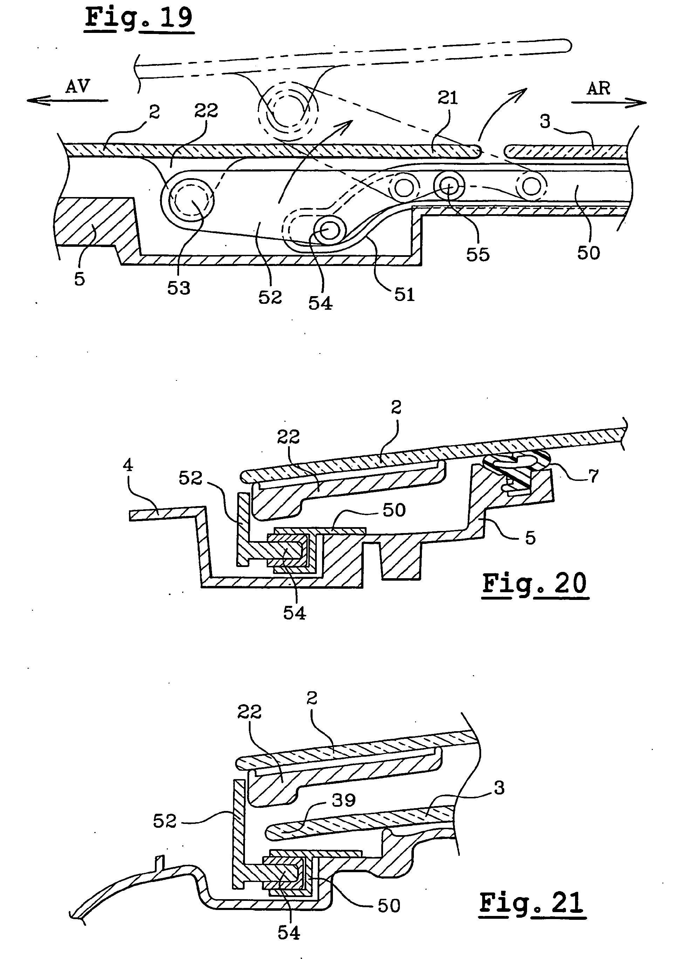

In Fig. 3 ist durch Transparenz durch die bewegliche Scheibe 2 auch eine hintere Führungsschiene 50 zu sehen, die ebenfalls in der Richtung nach vorne durch eine geneigte Rampe 51 abgeschlossen wird. In der Ansicht der Fig. 3 wird die hintere Führungsschiene als relativ zur Kante der festen Scheibe 3 seitlich nach außen liegend dargestellt. Wie jedoch später insgesamt oder in Verbindung mit den Figuren 20 und 21 zu zeigen sein wird, kann es bevorzugt werden, diese hinteren Führungsschienen unter den Seitenkanten der festen Scheibe anzuordnen, was es ermöglicht, der Kante des Daches die alleinige Funktion als Zierleiste zu belassen, ohne daß dort die für die Plazierung der Schiene notwendigen Ausformungen vorgesehen werden müssen. Unabhängig davon, bleibt die Führungsfunktion der hinteren Seite der beweglichen Scheibe, die im folgenden beschrieben wird, in identischer Weise erhalten.

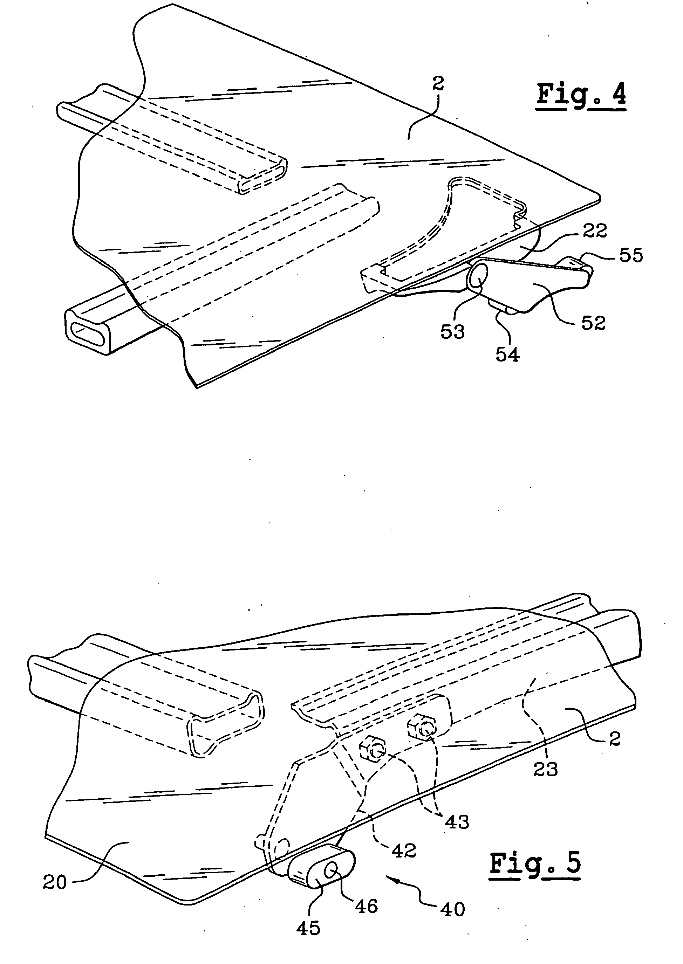

Wie in Fig. 4 dargestellt, weisen die hinteren Führungsmittel der beweglichen Scheibe beiderseits eine Schwenkeinrichtungsstange 52 auf, die drehbar auf einem Zapfen 53 montiert ist, welcher an einer Schwenkeinrichtungslagerung 22 befestigt ist, die unterhalb der beweglichen Scheibe 2, beispielsweise durch Kleben, verbunden wird. Entfernt von diesem Zapfen weist die Schwenkeinrichtungsstange 52 zwei Führungsgleitschuhe 54, 55 auf, die in einer solchen Weise angeordnet sind, daß sie mit der Achse des Zapfens ein Dreieck bilden und die auch in adäquater Form angeordnet sind, um die für den hinteren Teil der beweglichen Scheibe erforderliche, durch die Pfeile der Fig. 19 dargestellte Kinematik zu erhalten. Es wird zur Erinnerung festgehalten, daß der vordere Teil 51 der hinteren Führungsschiene 50 in Form eines Kreisbogens ausgebildet ist, was in Fig. 19 gut zu sehen ist, und daß der Gleitschuh auf der Schwenkeinrichtungsstange liegen, so daß:
- in der geschlossenen Stellung der beweglichen Scheibe 2 die Interaktion des geneigten Teils 51 der Schiene und der Führungsgleitschuhe 54, 55 die Schwenkeinrichtungsstange 52 in einer in durchgezogenen Linien in Fig. 19 gezeigten, im wesentlichen horizontalen Lage hält, wobei der Zapfen 53 in der unteren Stellung befindlich ist und die bewegliche Scheibe nach unten gegen die Dichtung 7 abgestützt hält;
- wenn die Bewegung der beweglichen Scheibe nach hinten gesteuert wird, bewirkt die Schiene 50, daß der hintere Gleitschuh 55 sich im wesentlichen horizontal gleitend bewegt, während die Neigung der Rampe 51 der zweite Gleitschuh 54 nach oben bewegt, was zur Wirkung hat, die Schwenkeinrichtungsstange 52 drehen zu lassen und in die in Fig. 19 in gestrichelter Linie dargestellte Lage zu führen, also den hinteren Teil 21 der beweglichen Scheibe anzuheben und gleichzeitig nach oberhalb der festen Scheibe 3 zu führen.

Ein System mit einer ähnlichen Kinematik für die Führung des rückwärtigen Teils der beweglichen Scheibe wird in dem bereits zitierten Dokument FR-A-2797225 beschrieben.

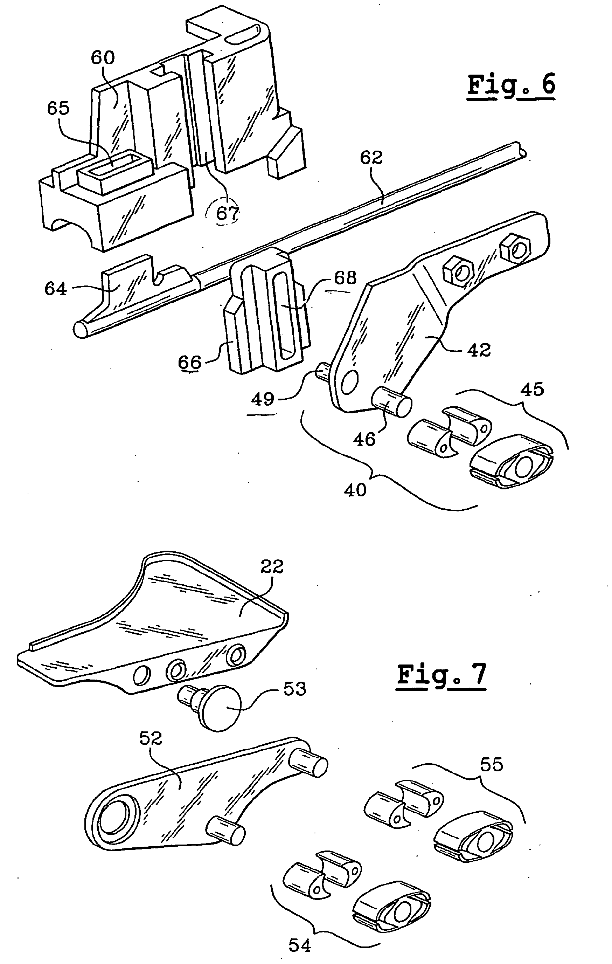

Fig. 7 ist eine Explosionsdarstellung der Schwenkeinrichtungsstange 52, ihrer Lagerung 22 und ihrer Gleitschuhe 55. Es ist hier anzumerken, daß die Gleitschuhe relativ zur Schwenkeinrichtungsstange auf der Außenseite gelegen sind, wobei diese Montage also für die Variante geeignet ist, bei der die hintere Führungsschiene in Richtung auf die Dachkante ausgerichtet ist (Fall der Fig. 3). Im Gegensatz dazu sind.im Fall der Fig. 4 die Gleitschuhe zur Mittelebene des Fahrzeuges hin orientiert und also geeignet, sich, wie in den Figuren 20 und 21 gezeigt, in einer unterhalb der Kante der festen Scheibe gleitend zu bewegen.

Die vorderen Führungsmittel 40, die in den Figuren 5, 6 und 8 dargestellt werden, weisen beiderseits einen Arm 42 auf, der beispielsweise durch Schrauben 43 oder ähnliches an einer durch ein Winkelblech gebildete Lagerung 23 befestigt ist, wobei das genannte Winkelblech beispielsweise durch Klebung unterhalb der beweglichen Scheibe 2 befestigt ist. Der Arm 42 erstreckt sich im wesentlichen in einer relativ zum Fahrzeug vertikalen Längsebene nach unten und trägt in seinem unteren Teil einen Gleitschuh 45, die drehbar auf ihrer Achse 46 montiert ist, welche fest mit dem Arm verbunden ist und sich senkrecht zu diesem erstreckt.

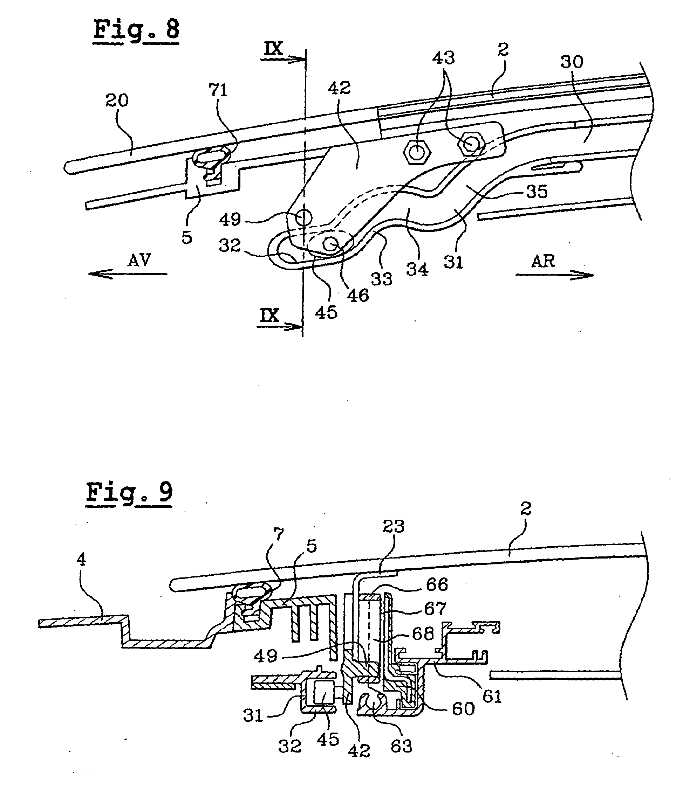

Der Gleitschuh 46 ist geeignet, sich gleitend in der Schiene 30 zu bewegen, deren vorderer Teil die geneigte Rampe 31 bildet, welche gut in Fig. 8 sichtbar ist, wo die dargestellte Schiene die auf der rechten Seite des Fahrzeuges liegende ist. Diese Rampe weist auf:
- einen kurzen horizontalen Abschlußteil 32, der am weitesten unten liegt und in dem der Gleitschuh 45 untergebracht ist, wenn sich das Dach in der geschlossenen Stellung befindet, wobei die bewegliche Scheibe 2 am Ende des Hubs nach vorne befindlich ist;
- eine erste Rampe 33, die dazu bestimmt ist, ein rasches Anheben der beweglichen Scheibe schon am Anfang ihres Hubes nach hinten zu bewirken, insbesondere um die Abstützung der beweglichen Scheibe auf der vorderen Dichtung 71 aufzuheben;
- eine Zwischenstufe 34, die leicht umgekehrt geneigt und dazu bestimmt ist, ein erneutes Absinken des vorderen Teils der beweglichen Scheibe zu bewirken, um sie erneut auf die Dichtung 7 aufzulegen, wenn aufgrund des Beginns der Verschiebebewegung der Scheibe der hintere Teil 21 derselben sich wie vorstehend in Verbindung mit Fig. 19 angegeben angehoben hat, um die bewegliche Scheibe in eine halb geöffnete Stellung zu bringen, bei der der hintere Teil angehoben und der Vorderteil in abdichtender Form auf dem Vorderteil der Dichtung aufgesetzt bleibt,
- eine zweite Rampe 35, um den Gleitschuh in die obere mit dem im wesentlichen horizontalen Teil der Schiene 30 fluchtende Lage zu bringen, um anschließend die Führung der beweglichen Scheibe bis in ihre Stellung der vollständigen Öffnung zu bringen.

Die Antriebsmittel der beweglichen Scheibe weisen einen Antriebsschlitten 60 auf, der gleitend beweglich auf einer Schlittenführungsschiene 61 montiert ist, die sich relativ zur allgemeinen Ebene des Arms 42 parallel zur vorderen Führungsschiene 30 auf der anderen Seite desselben erstreckt, wie dies insbesondere in Fig. 9 zu sehen ist. Der Antriebsschlitten 60 wird seinerseits in der Translation in an sich bekannter Weise durch ein Antriebskabel 62 angetrieben, das beispielsweise durch einen Elektromotor bewegt wird und in einer in der Schiene 61 vorgesehenen geeigneten Nut 63 geführt wird. Das Kabel 62 ist durch einen in der im Schlitten vorgesehenen Spalte 65 eingesetzten Keil 64 mit dem Schlitten 61 verbunden.

Der Schlitten 60 trägt einen vertikal beweglichen Gleitblock 66, der in einer T-förmigen Gleitschiene des Schlittens geführt wird, und der Gleitblock weist eine vertikale Nut 68 auf, in die ein Zapfen 49 eingreift, welcher fest mit dem Arm 42 verbunden ist, der sich horizontal auf der Seite des dem Gleitschuh 45 gegenüberliegenden Arms erstreckt. Die Gesamtheit des durch den genannten Zapfen, den Gleitblock und den Schlitten gebildeten Systems bildet ein teleskopisches Verbindungssystem, das es ermöglicht, einen vertikalen Hub des Arms sicherzustellen, der größer ist als der Hub, der beispielsweise allein aufgrund des direkten Verschiebens des Zapfens des Arms in einer direkt in dem Schlitten ausgeführten Rille möglich wäre. Mit anderen Worten kann für eine vorbestimmte Gesamthubhöhe der beweglichen Scheibe 2, die beispielsweise bei dem vorstehenden in Verbindung mit Fig. 2 angegebenen Ausführungsbeispiel erforderlich ist, der vertikale Platzbedarf der Antriebsmittel reduziert werden, was es ermöglicht, sie in der Dicke des Dachhimmels unterzubringen.

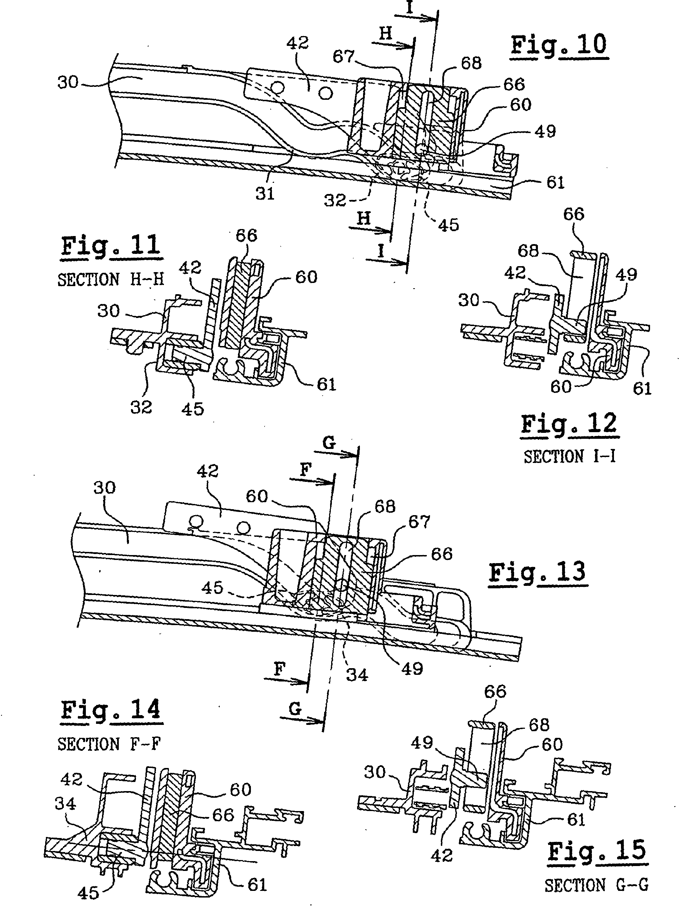

Unter Bezugnahme auf die Figuren 10 bis 18 wird nun die Funktionsweise des erfindungsgemäßen teleskopischen Verbindungssystems beschrieben.

In der in den Figuren 10, 11 und 12 dargestellten Lage ist die bewegliche Scheibe geschlossen, also an ihrer vorderen Anschlagstellung und in der tiefsten Lage befindlich, wobei der Gleitschuh 45 sich in dem Bereich des Endes 32 der Schiene bewegt. Der Zapfen 49 befindet sich also ganz unten in der Nut 68 des Gleitblocks 66, und letzterer ist seinerseits in der tiefstmöglichen Stellung relativ zum Antriebsschlitten 60.

Wenn das Antriebskabel 62 den Schlitten 60 nach hinten verschiebt, wird diese Bewegung auf den Gleitblock 66 und von dort auf den Zapfen 49 übertragen, der also die Bewegung des Arms 42 und der beweglichen Scheibe 2 bewirkt, wobei der Gleitschuh 45 sich gleitend in der Rampe 31 der vorderen Führungsschiene bewegt.

Wenn der Gleitschuh 45 bei der ersten Steigung 33 der Rampe eintrifft, zwingt sie den Arm, sich nach oben zu bewegen, und der Zapfen 49 bewegt sich dann gleitend in der Nut 68 des Gleitblocks 66 nach oben. Bei einer Fortsetzung der Bewegung nach hinten führt der Schlitten somit den Arm 42 bis in die in den Figuren 13 bis 15 dargestellte, halb geöffnete Stellung, in der der Gleitschuh 45 in der Zwischenstufe 34 der Führungsschiene zurückgekehrt ist. Es ist zu sehen, daß der Arm 42 sich ebenso wie der Zapfen 49 in der Nut 68 nach oben bewegt hat, doch der Gleitblock 66 verbleibt relativ zum Schlitten 60 auf der gleichen Höhe.

Bei der weiteren Fortsetzung der Bewegung des Schlittens wird der Arm 42 durch die auf den Gleitschuh 45 wirkende zweite Steigung 35 nach oben bewegt, und der Zapfen 49 kommt in der Nut 68 beim oberen Anschlag an. Um die Bewegung bis zur Öffnungsstellung fortsetzen zu können, nimmt demzufolge der Zapfen den Gleitblock nach oben mit und bewirkt, daß er sich in der T-förmigen Gleitschiene 67 des Schlittens gleitend bewegt, was es dem Arm 42 ermöglicht, weiter angehoben zu werden, bis der Gleitschuh 45 auf der Höhe des horizontalen Teils der Führungsschiene 30 eintrifft.

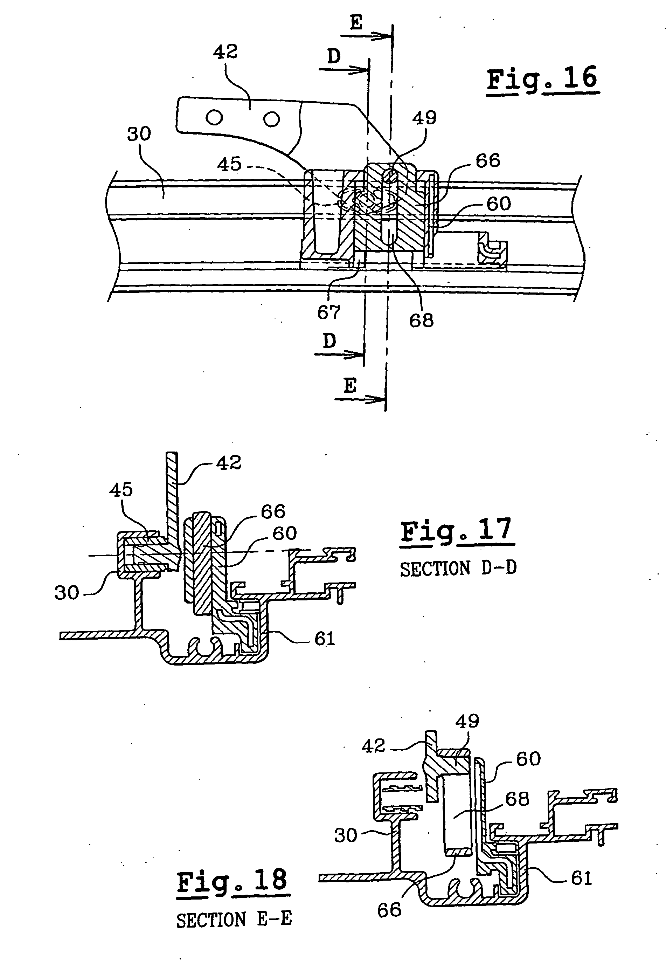

Der Antrieb des Schlittens 60 nach hinten kann dann fortgesetzt werden, wobei der Gleitblock in der oberen Stellung verbleibt und der Zapfen ebenfalls in der oberen Stellung in der Nut verbleibt, wie dies in den Figuren 16 bis 18 dargestellt wird.

Fig. 20 zeigt die Lage des hinteren Teils 21 der beweglichen Scheibe in der Schließstellung, wobei die Scheibe sich auf die Dichtung 7 abstützt.

Wie bereits erläutert, dreht sich die hintere Schwenkeinrichtungsstange 52 am Beginn des Hubs nach hinten in einer vertikalen und Längsebene relativ zum Fahrzeug und bewirkt das Anheben der hinteren Kante 21 der beweglichen Scheibe 2. Wenn die beiden Gleitschuhe 54, 55 in dem im wesentlichen horizontalen Bereich der Schiene 50 befindlich sind, befindet sich der hintere Teil der Scheibe, wie in Fig. 21 dargestellt, in der oberen Lage, und die Scheibe kann sich weiter nach hinten bewegen und gleitet dabei über die feste Scheibe 3. Dabei passieren die Schwenkeinrichtungsstangen 52 beiderseits die oberhalb der hinteren Führungsschiene 50 gelegenen Seitenkanten 39 der festen Scheibe 3.

Das vorstehend beschriebene Ausführungsbeispiel schränkt in keiner Weise die Erfindung ein. Insbesondere findet die Erfindung auch Anwendung für den Fall, bei dem keine halb geöffnete Zwischenstellung vorgesehen ist, wobei dann die Endrampe der Führungsschiene keine Zwischenstufe aufweist, sondern eine kontinuierliche Neigung. Des weiteren können die Mittel, die die teleskopische Gleitbewegung des Arms relativ zum Antriebsschlitten sicherstellen, durch Mittel äquivalenter Technologie ersetzt werden. Die erfindungsgemäßen Mittel der teleskopischen Verbindung können auch mit anderen als den vorstehend beschriebenen hinteren Führungsmitteln verwendet werden, ohne damit den Rahmen der Erfindung zu verlassen.

## Patentansprüche

1. Schiebedach für ein Kraftfahrzeug, welches eine bewegliche Scheibe (2) aufweist, die dazu bestimmt ist, eine im Dach vorgesehene Öffnung (6) zu verschließen oder freizugeben, vordere Führungsmittel (40, 30, 31) und hintere Führungsmittel (50, 51, 52) zur Führung einer Öffnungs- oder Schließbewegung der beweglichen Scheibe nach einem Hub, dessen allgemeine Richtung im wesentlichen horizontal verläuft und am Ende mit einer geneigten Bahn abschließt, die eine vertikale Bewegung bewirkt, und Antriebsmittel (60, 49), welche auf die vorderen Führungsmittel einwirken, um die genannte Bewegung jeweils nach vorne und nach hinten zu steuern,
**dadurch gekennzeichnet, daß** die vorderen Führungsmittel (40) mit den Antriebsmitteln (60) durch teleskopische Verbindungsmittel (49, 68, 66, 67) verbunden sind, welche die Bewegung der Führungsmittel relativ zu den Antriebsmitteln nach einer im wesentlichen vertikalen Richtung erlauben.

2. Schiebedach nach Anspruch 1, **dadurch gekennzeichnet, daß** die Antriebsmittel einen Antriebsschlitten (60) und die teleskopischen Verbindungsmittel einen Gleitblock (66) aufweisen, der in vertikaler Gleitbewegung auf dem Antriebsschlitten geführt wird und auf dem die vorderen Führungsmittel (40) in vertikaler Gleitbewegung geführt werden.

3. Schiebedach nach Anspruch 2, **dadurch gekennzeichnet, daß** der Gleitblock (66) auf dem Antriebsschlitten (60) durch ein T-förmiges oder schwalbenschwanzförmiges Gleitschienensystem (67) geführt wird und die Führungsmittel einen Zapfen (49) aufweisen, der sich seitlich erstreckt und in einer in dem Gleitblock (66) angebrachten Nut (68) geführt wird.

4. Schiebedach nach Anspruch 1, **dadurch gekennzeichnet, daß** die vorderen Führungsmittel auf jeder Seite der beweglichen Scheibe (2) eine mit dem Dach des Fahrzeuges fest verbundene vordere Führungsschiene (30) aufweisen, in die ein Gleitschuh (45) eingreift, welcher mit einem fest auf der beweglichen Scheibe befestigten Arm (42) verbunden ist, wobei die Schiene einen seitlich zur Mitte des Fahrzeuges hin offenen U-förmigen Querschnitt hat und in Richtung auf das Fahrzeuginnere relativ zu einer Dichtung (7) montiert ist, die die Öffnung (6) begrenzt und auf die die bewegliche Scheibe in der Schließstellung zu liegen kommt.

5. Schiebedach nach Anspruch 4, **dadurch gekennzeichnet, daß** die vorderen Führungsschienen (30) vorne einen Teil (31) aufweisen, der eine geneigte Bahn mit einer Zwischenstufe (34) mit umgekehrter Neigung gewährleistet, um dem Schiebedach eine halbgeöffnete Zwischenstellung zu erlauben.

6. Schiebedach nach Anspruch 1, **dadurch gekennzeichnet, daß** die hinteren Führungsmittel beiderseits eine hintere Führungsschiene (50) aufweisen, die mit dem Dach fest verbunden ist und in die Gleitschuhe (54, 55) eingreifen, welche fest mit einer drehbar an der beweglichen Scheibe (2) montierten Schwenkeinrichtung (52) verbunden sind.

7. Schiebedach nach Anspruch 6, **dadurch gekennzeichnet, daß** die hintere Führungsschiene (50) einen seitlich zur Außenseite des Fahrzeuges hin offenen U-förmigen Querschnitt hat und in Richtung auf die Mitte des Fahrzeuges relativ zu einer Schwenkeinrichtung (52) unter einer festen Dachscheibe (3), auf deren beiden Seiten sich die Schwenkeinrichtungsstangen (52) bewegen, montiert ist.

8. Schiebedach nach Anspruch 1, **dadurch gekennzeichnet, daß** die vordere Kante (20) der beweglichen Scheibe eine gegenüber ihrem hinteren Teil größere Breite aufweist.

## Claims

1. Sliding roof for a motor vehicle, which has a movable panel (2) which is intended to close or open up an opening (6) provided in the roof, front guide means (40, 30, 31) and rear guide means (50, 51, 52) for guiding an opening or closing movement of the movable panel in accordance with the stroke, the general direction of which runs substantially horizontally and terminates at the end with an inclined path which brings about a vertical movement, and driving means (60, 49) which act on the front guide means in order to control the abovementioned movement in each case to the front and to the rear,
**characterized in that** the front guide means (40) are connected to the driving means (60) by telescopic connecting means (49, 68, 66, 67) which permit the movement of the guide means relative to the driving means in accordance with a substantially vertical direction.

2. Sliding roof according to Claim 1, **characterized in that** the driving means have a driving slide (60) and the telescopic connecting means have a sliding block (66) which is guided in a vertical sliding movement on the driving slide and on which the front guide means (40) are guided in a vertical sliding movement.

3. Sliding roof according to Claim 2, **characterized in that** the sliding block (66) is guided on the driving slide (60) by a T-shaped or dovetail-shaped sliding rail system (67) and the guide means have a pin (49) which extends laterally and is guided in the groove (68) provided in the sliding block (66).

4. Sliding roof according to Claim 1, **characterized in that** the front guide means have, on each side of the movable panel (2), a front guide rail (30) which is fixedly connected to the roof of the vehicle and in which a sliding shoe (45) engages, said sliding shoe being connected to an arm (42) which is fastened fixedly on the movable panel, the rail having a U-shaped cross section which is open laterally towards the centre of the vehicle and, in the direction towards the vehicle interior, being fitted relative to a seal (7) which bounds the opening (6) and onto which the movable panel comes to lie in the closed position.

5. Sliding roof according to Claim 4, **characterized in that** the front guide rails (30) have, at the front, a part (31) which ensures an inclined path with an intermediate step (34) having an inverted inclination in order to permit a semi-open intermediate position for the sliding roof.

6. Sliding roof according to Claim 1, **characterized in that** the rear guide means have on both sides a rear guide rail (50) which is fixedly connected to the roof and in which sliding shoes (54, 55) engage, which sliding shoes are connected fixedly to a pivoting device (52) which is fitted rotatably on the movable panel (2).

7. Sliding roof according to Claim 6, **characterized in that** the rear guide rail (50) has a U-shaped cross section which is open laterally towards the outside of the vehicle and, in the direction towards the centre of the vehicle, is fitted relative to a pivoting device (52) under a fixed roof panel (3), on both sides of which the pivoting device rods (52) move.

8. Sliding roof according to Claim 1, **characterized in that** the front edge (20) of the movable panel has a greater width than the rear part thereof.

## Revendications

1. Toit ouvrant pour un véhicule automobile, qui présente un panneau mobile (2) qui est prévu pour fermer ou libérer une ouverture (6) prévue dans le toit, des moyens de guidage avant (40, 30, 31) et des moyens de guidage arrière (50, 51, 52) pour guider un mouvement d'ouverture ou de fermeture du panneau mobile suivant une course dont la direction générale s'étend essentiellement horizontalement, et se termine à la fin avec une voie inclinée, qui provoque un mouvement vertical, et des moyens d'entraînement (60, 49) qui agissent sur les moyens de guidage avant afin de commander ledit mouvement à chaque fois vers l'avant et vers l'arrière,
**caractérisé en ce que** les moyens de guidage avant (40) sont connectés aux moyens d'entraînement (60) par des moyens de connexion télescopiques (49, 68, 66, 67), qui permettent le mouvement des moyens de guidage par rapport aux moyens d'entraînement dans une direction essentiellement verticale.

2. Toit ouvrant selon la revendication 1, **caractérisé en ce que** les moyens d'entraînement présentent un chariot d'entraînement (60) et les moyens de connexion télescopiques présentent un bloc glissant (66), qui est guidé dans un mouvement de glissement vertical sur le chariot d'entraînement et sur lequel sont guidés les moyens de guidage avant (40) dans un mouvement de glissement vertical.

3. Toit ouvrant selon la revendication 2, **caractérisé en ce que** le bloc glissant (66) est guidé sur le chariot d'entraînement (60) par un système de rails de glissement (67) en forme de T ou en forme de queue d'aronde, et les moyens de guidage présentent un tourillon (49) qui s'étend latéralement et qui est guidé dans une rainure (68) montée dans le bloc glissant (66).

4. Toit ouvrant selon la revendication 1, **caractérisé en ce que** les moyens de guidage avant présentent, de chaque côté du panneau mobile (2), un rail de guidage avant (30) connecté fixement au toit du véhicule, dans lequel vient en prise un patin glissant (45), qui est connecté à un bras (42) fixé fixement sur le panneau mobile, le rail ayant une section transversale en forme de U ouvert latéralement vers le milieu du véhicule, et étant monté dans la direction de l'intérieur du véhicule par rapport à un joint d'étanchéité (7), qui limite l'ouverture (6) et contre lequel vient en appui le panneau mobile dans la position de fermeture.

5. Toit ouvrant selon la revendication 4, **caractérisé en ce que** les rails de guidage avant (30) présentent à l'avant une partie (31) qui garantit une voie inclinée avec un étage intermédiaire (34) d'inclinaison inverse, afin de permettre au toit ouvrant d'adopter une position intermédiaire à moitié ouverte.

6. Toit ouvrant selon la revendication 1, **caractérisé en ce que** les moyens de guidage arrière présentent, des deux côtés, un rail de guidage arrière (50), qui est connecté fixement au toit et qui vient en prise dans les patins glissants (54, 55), qui sont connectés fixement à un dispositif de pivotement (52) monté à rotation sur le panneau mobile (2).

7. Toit ouvrant selon la revendication 6, **caractérisé en ce que** le rail de guidage arrière (50) a une section transversale en forme de U ouvert latéralement vers le côté extérieur du véhicule, et est monté dans la direction du centre du véhicule par rapport à un dispositif de pivotement (52) sous un panneau de toit fixe (3), sur les deux côtés duquel se déplacent les tringles du dispositif de pivotement (52).

8. Toit ouvrant selon la revendication 1, **caractérisé en ce que** l'arête avant (20) du panneau mobile présente une plus grande largeur que sa partie arrière.
